# EUROPEAN PATENT APPLICATION

(11) **EP 4 592 412 A1**
(43) Date of publication of application: **30.07.2025**
(21) Application number: 23877145.5
(22) Date of filing: 27.09.2023
(51) Int. Cl.: C21D 8/12, C22C 38/00, C22C 38/60, H01F 1/147

(54) **NONORIENTED ELECTROMAGNETIC STEEL SHEET AND METHOD FOR MANUFACTURING SAME**

(30) Priority: 14.10.2022 JP 2022165374
(71) Applicant: JFE Steel Corporation, Tokyo 100-0011 (JP)
(72) Inventor: SAITO, Hayato, Tokyo 100-0011 (JP); OKUBO, Tomoyuki, Tokyo 100-0011 (JP); SUEHIRO, Ryuichi, Tokyo 100-0011 (JP); MARUYAMA, Shigehiro, Tokyo 100-0011 (JP)
(74) Representative: Grünecker Patent- und Rechtsanwälte PartG mbB
(86) International application number: PCT/JP2023/035057
(87) International publication number: WO 2024/080140

(57) **Abstract**

Provided is a non-oriented electrical steel sheet that can achieve both excellent magnetic and blanking properties, and propose a method for producing the same. The non-oriented electrical steel sheet has the chemical composition including, in mass%, C: 0.0050% or less, Si: 2.0 to 5.0%, Mn: 0.2 to 1.8%, P: 0.020% or less, S: 0.0050% or less, Al: 0.25 to 2.00%, N: more than 0.0030% and 0.0150% or less, O: 0.0050% or less, and one or both of Sn and Sb: 0.01 to 0.10% in total, with the balance being Fe and unavoidable impurities, characterized in that the number of AlN particles with a particle size of 0.8 µm or more present in a thickness cross-section in the rolling direction of the steel sheet is 10 or more per mm². The method for producing such a non-oriented electrical steel sheet includes heating a slab with a heating start temperature of 300°C or higher and a heating temperature of 1100 to 1300°C, subjecting the hot-rolled sheet to annealing at a temperature of 800 to 950°C, and performing finishing annealing at a temperature of 850 to 1050°C.

## Description

### Technical Field

The present invention relates to a non-oriented electrical steel sheet that is excellent in the properties of a cut surface resulting from blanking, and a method for producing the same.

### Background Art

In recent years, there has been increasing need for energy saving, and there has also been strong demand for higher efficiency in electrical devices. Therefore, non-oriented electrical steel sheets, which are widely used as iron core materials of electrical devices, have also been strongly required to have improved iron loss properties. In response, iron loss has been reduced by adding an element that increases specific resistance, such as Si or Al, or by reducing the sheet thickness, for example.

Meanwhile, when non-oriented electrical steel sheets are used as an iron core material of a motor, for example, it is common that an iron core is produced by blanking the electrical steel sheet into steel sheets with an iron core shape, and then laminating the obtained steel sheets. However, such a method has a problem in that the magnetic properties of the iron core would degrade due to strain introduced into the steel sheets during blanking, or due to changes in the shape of the cut surface resulting from blanking, such as the occurrence of shear drop and burrs.

Therefore, numerous studies have been conducted so far on improving the blanking properties. For example, Patent Literature 1 discloses a non-oriented electrical steel containing, in mass %, Si: 1.5% or less, Mn: 0.4% or more but 1.5% or less, sol.Al: 0.01% or more but 0.04% or less, Ti: 0.0015% or less, N: 0.0030% or less, S: 0.0010% or more but 0.0040% or less, and B: 0.5 or more but 1.5 or less (in terms of B/N), with the balance being Fe and unavoidable impurities, in which 10% or more (in terms of the number of particles) of sulfide containing Mn are co-precipitated with B precipitates. According to such a technology, it is presumably possible to achieve both high blanking and magnetic properties when the crystal grain size is set to 30 µm or less.

In addition, Patent Literature 2 discloses a non-oriented electrical steel that contains steel components including, in mass %, C: 0.003% or less, Si: 1.0% or more but 3.0% or less, Al: 0.1% or more but 3.0% or less, and Mn: 0.1% or more but 1.0% or less, with the balance being Fe and unavoidable impurities, in which the Al content and the Si content satisfy the relationship of 0.2≤Al/(Si+Al)≤0.6, the yield ratio represented by (the yield strength/the tensile strength) is 0.6 or more, and the Vickers hardness is 200 or less, and thus is excellent in magnetic properties and blanking properties.

### Citation List

### Patent Literature

Patent Literature 1: International Publication No. WO 2005/100627
Patent Literature 2: JP-2015-214758A

### Summary of Invention

### Technical Problem

However, the technology disclosed in Patent Literature 1 above is directed to low-grade products having a Si content of 1.5% or less and thus having low magnetic properties, and is not applicable to high-grade products having a high Si content. Meanwhile, the technology disclosed in Patent Literature 2 above requires that the final product steel sheet have a Vickers hardness of 200 or less. However, since Si is an element that increases hardness, the Si content would be limited. Therefore, the conventional technologies have a problem in that excellent magnetic properties are difficult to achieve.

In view of the above problem of the conventional technologies, an object of the present invention is to provide a non-oriented electrical steel sheet that can achieve both excellent magnetic blanking properties and propose an advantageous method for producing the same.

### Solution to Problem

To solve the above problem, the inventors have made concentrated studies on the influence of the chemical composition of a steel sheet, a production method therefor, and a ratio of a shear surface and a fracture surface of a cut surface of the steel sheet resulting from blanking, on the magnetic properties. Consequently, the inventors have arrived at the present invention by finding that increasing the content of N, which has been considered to degrade the magnetic properties so far, can increase the ratio of the shear surface of the cut surface resulting from blanking, and thus the degradation of the magnetic properties can be suppressed.

The present invention based on the above findings is as follows.
[1] A non-oriented electrical steel sheet having a chemical composition including, in mass %, C: 0.0050% or less, Si: 2.0 to 5.0%, Mn: 0.2 to 1.8%, P: 0.020% or less, S: 0.0050% or less, Al: 0.25 to 2.00%, N: more than 0.0030% but 0.0150% or less, O: 0.0050% or less, and one or both of Sn and Sb: 0.01 to 0.10% in total, with a balance being Fe and unavoidable impurities, in which the number of AlN particles with a particle size of 0.8 µm or more present in a thickness cross-section in the rolling direction of the steel sheet is 10 or more per mm².
[2] The non-oriented electrical steel sheet according to [1] above, further including, in addition to the above chemical composition, at least one group of compositions selected from the following groups A to I, in mass%:
   - group A: one or more elements selected from the group consisting of Ca, Mg, and REM: 0.0010 to 0.0080% in total;
   - group B: one or more elements selected from the group consisting of Ti, Nb, and V: 0.0005 to 0.0030% in total;
   - group C: one or more elements selected from the group consisting of Cr, Mo, Cu, and Ni: 0.005 to 0.40% in total;
   - group D: one or more elements selected from the group consisting of Co, W, and Ta: 0.0005 to 0.0200% in total;
   - group E: B: 0.0003 to 0.0040%;
   - group F: one or more elements selected from the group consisting of Ge and Ga: 0.0005 to 0.0100% in total;
   - group G: one or more elements selected from the group consisting of Zn and As: 0.001 to 0.010% in total; and
   - group I: Pb: 0.0001 to 0.0015%.
[3] The non-oriented electrical steel sheet according to [1] or [2] above, in which a ratio of a shear surface of a cut surface of the steel sheet resulting from blanking is 60% or more, where the ratio (%) of the shear surface is a value of (an area of the shear surface)/(the area of the shear surface + an area of a fracture surface) × 100.
[4] A method for producing a non-oriented electrical steel sheet, the method including: heating a steel slab having a chemical composition including, in mass %, C: 0.0050% or less, Si: 2.0 to 5.0%, Mn: 0.2 to 1.8%, P: 0.020% or less, S: 0.0050% or less, Al: 0.25 to 2.00%, N: more than 0.0030% but 0.0150% or less, O: 0.0050% or less, and one or both of Sn and Sb: 0.01 to 0.10% in total, with a balance being Fe and unavoidable impurities; subjecting the steel slab to hot rolling to obtain a hot-rolled sheet; subjecting the hot-rolled sheet to hot-band annealing; performing one cold rolling step or two or more cold rolling steps with intermediate annealing interposed between each cold rolling step to obtain a cold-rolled sheet; and subjecting the cold-rolled sheet to finishing annealing, characterized in that the heating of the slab is performed with a heating start temperature of 300°C or higher and a heating temperature of 1100 to 1300°C, the annealing of the hot-rolled sheet is performed at a temperature of 800 to 950°C, and the finishing annealing of the cold-rolled sheet is performed at a temperature of 850 to 1050°C.
[5] The method for producing a non-oriented electrical steel sheet according to [4] above, in which the steel slab further includes, in addition to the chemical composition, at least one group of compositions selected from the following groups A to I, in mass%:
   - group A: one or more elements selected from the group consisting of Ca, Mg, and REM: 0.0010 to 0.0080% in total;
   - group B: one or more elements selected from the group consisting of Ti, Nb, and V: 0.0005 to 0.0030% in total;
   - group C: one or more elements selected from the group consisting of Cr, Mo, Cu, and Ni: 0.005 to 0.40% in total;
   - group D: one or more elements selected from the group consisting of Co, W, and Ta: 0.0005 to 0.0200% in total;
   - group E: B: 0.0003 to 0.0040%;
   - group F: one or more elements selected from the group consisting of Ge and Ga: 0.0005 to 0.0100% in total;
   - group G: one or more elements selected from the group consisting of Zn and As: 0.001 to 0.010% in total; and
   - group I: Pb: 0.0001 to 0.0015%.

### Advantageous Effects of Invention

According to the present invention, a non-oriented electrical steel sheet can be produced that can achieve both excellent magnetic and blanking properties. Thus, it is possible to provide a material suitable for producing a motor using an iron core produced by blanking.

### Brief Description of Drawings

[Fig. 1] Fig. 1 is a schematic view of an end portion resulting from shearing.
[Fig. 2] Fig. 2 is a graph showing the relationship between the number density of AlN particles and the ratio of a shear surface.
[Fig. 3] Fig. 3 is a graph showing the relationship between the ratio of the shear surface and iron loss.

### Description of Embodiments

Based on the premise of producing a motor by blanking a non-oriented electrical steel sheet, the inventors conducted experiments to examine the influence of AlN precipitates on the properties of the cut surface of the steel sheet resulting from blanking, and the influence of the properties of the cut surface on the magnetic properties. Specifically, the inventors first produced test specimens with varied particle sizes and number densities of AlN precipitates in the resulting steel sheet by varying the N content in their materials. Next, the inventors studied the influence of the particle size and number density of the AlN precipitates on the ratio of a shear surface of the cut surface of the steel sheet resulting from blanking, and then conducted the following experiments to evaluate the influence of the ratio of the shear surface on the magnetic properties.

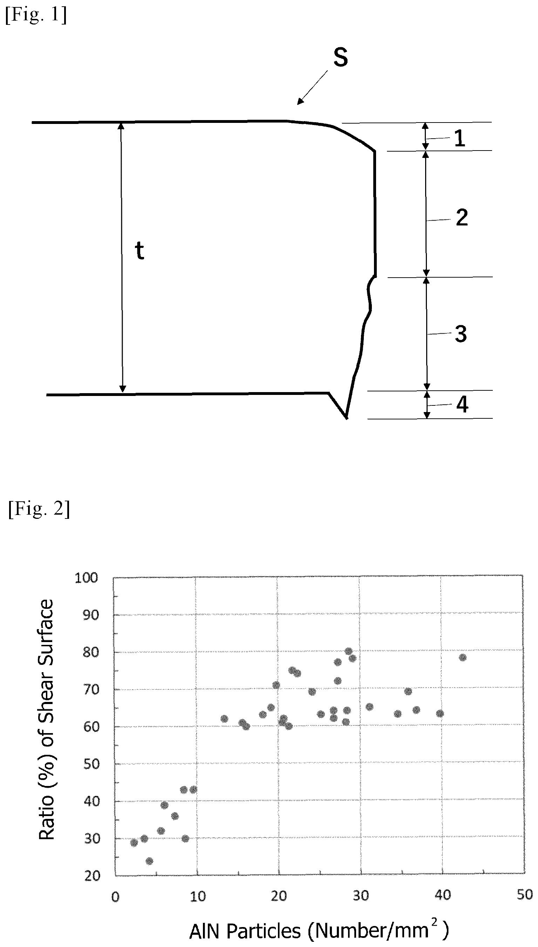

Herein, Fig. 1 shows a schematic view of a cut surface S resulting from blanking. The shear surface S resulting from blanking typically includes a shear drop 1, a shear surface 2, a fracture surface 3, and a burr 4.

The shear drop 1 is a region extending from the upper surface of a steel sheet with a thickness t to the upper end of the shear surface 2 and having a small deformation. The burr 4 is a region protruding downward from the lower surface of the steel sheet with the thickness t. When the steel sheet has a thickness of commonly used electrical steel sheet, it is not necessary to consider the shear drop 1 and the burr 4 when calculating the ratio of the shear surface because both the shear drop 1 and the burr 4 are sufficiently smaller than the shear surface and the fracture surface.

Thus, the ratio of the shear surface 2 is calculated based on the ratio of the area of the shear surface 2 to the total area of the shear surface 2 and fracture surface 3.

Steel slabs were produced, each having a chemical composition mainly including, in mass %, C: 0.0033%, Si: 2.8%, Mn: 0.30%, P: 0.010%, S: 0.003%, Al: 0.64%, Sn: 0.025, and O: 0.0013%, with N added in the varying range of 0.0020 to 0.010%. Each steel slab was heated at a heating start temperature of 500°C and at a heating temperature of 1150°C and then hot-rolled to obtain a hot-rolled sheet with a thickness of 1.8 mm. The hot-rolled sheet was subjected to hot-band annealing at 930°C for 30 seconds. The hot-band-annealed sheet was pickled and cold-rolled to obtain a cold-rolled sheet with a final thickness of 0.25 mm. The cold-rolled sheet was then subjected to finishing annealing at 980°C for 15 seconds to produce a non-oriented electrical steel sheet.

To evaluate the blanking properties and magnetic properties of the obtained non-oriented electrical steel sheet, blanking was performed thereon in the L-direction (rolling direction) and the C-direction (direction perpendicular to the rolling direction) with a clearance set to 5% to form a specimen with a length of 280 mm and a width of 30 mm. The iron loss W_{15/50} of the specimen was measured in accordance with JIS C 2550-1.

In addition, blanking was similarly performed on the obtained non-oriented electrical steel sheet in the L- and C-directions with a clearance set to 5% to form a specimen with a length of 280 mm and a width of 10 mm. Next, the cut surfaces resulting from the blanking were observed with an optical microscope to measure the ratios of the shear surfaces of the cut surfaces in the L- and C- directions and to determine the mean value thereof.

Further, a specimen was cut from the obtained non-oriented electrical steel sheet and polished, and the thickness cross-section in the rolling direction of the specimen was observed with an FE-SEM to measure the number of AlN particles with a particle size of 0.8 µm or more observed per mm². The reason for limiting the particle size to 0.8 µm or more is that previous research shows that particles with a particle size of 0.8 µm or more affect fracture.

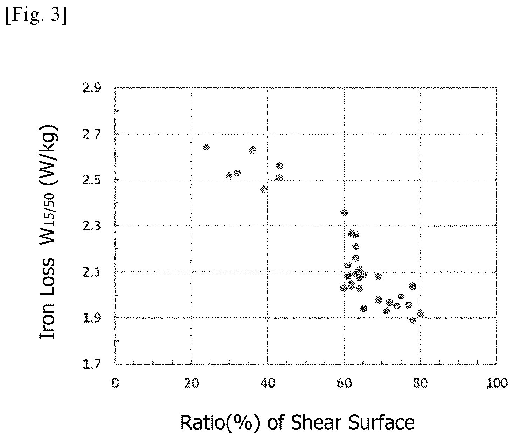

Fig. 2 shows the influence of the number of coarse AlN particles (with a particle size of 0.8 µm or more) on the ratio of the shear surface. In Fig. 2, AlN particles (the number/mm₂) on the X axis indicate AlN particles with a particle size of 0.8 µm or more. Fig. 2 shows that when the number of coarse AlN particles per mm² is 10 or more, the ratio of the shear surface is 60% or more. Fig. 3 shows the influence of the ratio of the shear surface on the iron loss. Fig. 3 shows that the iron loss is reduced when the ratio of the shear surface is 60% or more.

From the above results, the inventors found that the ratio of the shear surface of the cut surface S resulting from blanking is a new factor for evaluating iron loss after blanking and that it is possible to suppress the deterioration of the iron loss property due to blanking by increasing the ratio of the shear surface, which is the evaluation factor. In addition, the inventors have also found that it is effective to increase coarse AlN precipitate particles with a particle size of 0.8 µm or more in order to increase the ratio of the shear surface, and for this purpose, it is effective to increase the N content in the steel. Thus, the inventors arrived at the present invention.

### <Non-oriented electrical steel sheet>

A non-oriented electrical steel sheet according to the present embodiment will be described.

First, the reasons for limiting the chemical composition of the non-oriented electrical steel sheet will be described. Note that symbol "%" related to each component means "mass %" unless otherwise stated.

### C: 0.0050% or less

C is a detrimental element that forms carbide and degrades the iron loss property. Therefore, the C content is set to 0.0050% or less. Preferably, the C content is set to 0.0035% or less, and more preferably to 0.0030% or less. Note that the lower limit of the C content is not specified, but is preferably set to 0.0003% or more from the viewpoint of reducing the decarburization cost in the steelmaking step.

### Si: 2.0 to 5.0%

Si has the effect of increasing the specific resistance of steel and thus reducing iron loss. To obtain such an effect, the Si content is set to 2.0% or more, preferably to 2.8% or more. In an application to a high-grade material requiring even lower iron loss, the Si content is more preferably set to more than 3.0%. Meanwhile, when the Si content is more than 5.0%, blanking properties are reduced and rolling becomes difficult. Therefore, the Si content is set to 5.0% or less. From the viewpoint of suppressing a decrease in magnetic flux density, the Si content is preferably set to 3.8% or less.

### Mn: 0.2 to 1.8%

As with Si, Mn is an element effective in reducing iron loss. Therefore, the Mn content is set to 0.2% or more. Preferably, the Mn content is set to 0.3% or more. Meanwhile, when the Mn content is more than 1.8%, the iron loss property deteriorates due to the precipitation of fine Mn carbide particles. Therefore, the Mn content is set to 1.8% or less.

### P: 0.020% or less

P is segregated at grain boundaries and causes the embrittlement of the steel sheet, reducing its blanking properties and rollability. Therefore, the P content is set to 0.020% or less. The P content is set preferably to 0.015% or less, more preferably to 0.010% or less. Note that the lower limit of the P content is not specified, but it is preferably set to 0.003% or more from the viewpoint of lowering the cost of reducing P in the steelmaking step.

### S: 0.0050% or less

S is a detrimental element that impairs hot workability and forms fine sulfide particles, degrading the iron loss property. Therefore, the S content is set to 0.0050% or less. It is set preferably to 0.0030% or less, more preferably to less than 0.0020%.

### Al: 0.25 to 2.00%

As with Si, Al has the effect of increasing the specific resistance of a steel sheet and thus reducing iron loss. In the present invention, Al also has the effect of improving the blanking properties by combining with N to form coarse AlN particles and thus dispersing in steel. Therefore, the Al content is set to 0.25% or more, preferably to 0.6% or more. Meanwhile, when an excessive amount of Al is added, a large amount of alumina are produced, which reduces the blanking properties and induces surface defects. Therefore, the Al content is set to 2.00% or less, preferably to 1.80% or less.

### N: more than 0.0030% but 0.0150% or less

N has the effect of improving the blanking properties by forming AlN, which precipitates and disperses in the steel. This effect is enhanced as the size and number of AlN particles increase. Therefore, the N content is set to more than 0.0030%. Note that further increasing the size of AlN particles and dispersing more AlN particles can further improve the blanking properties. Therefore, the N content is preferably set to more than 0.0050%, more preferably to more than 0.0080%. Meanwhile, when an excessive amount of N is added, air bubbles are formed in the steel slab, which may reduce productivity. Besides, the blanking properties is reduced. Therefore, the N content is set to 0.0150% or less.

### O: 0.0050% or less

O forms oxide and thus impairs the growth of crystal grains, which degrades the iron loss property. Therefore, the O content is set to 0.0050% or less. Preferably, the O content is set to 0.0030% or less.

### One or both of Sn and Sb: 0.01 to 0.10% in total

Sn and Sb are elements that are effective in improving the texture and thus enhancing the magnetic properties. Therefore, the total content of one or both of SN and Sb is set to 0.01% or more. Meanwhile, the above effect is saturated when an excessive amount of one or both of Sn and Sb is added. Therefore, the total content of one or both of Sn and Sb is set to 0.10% or less.

The non-oriented electrical steel sheet according to the present invention contains the above components, with the balance being Fe and unavoidable impurities. It is preferable that, in addition to the above chemical composition, the non-oriented electrical steel sheet further contain, at least one group of compositions selected from the following groups A to I to improve the magnetic properties.

### -Group A: one or more elements selected from the group consisting of Ca, Mg, and REM: 0.0010 to 0.0080% in total

Each of Ca, Mg, and REM has the effect of fixing S as sulfide and thus reducing iron loss. In addition, since sulfide of each of Ca, Mg, and REM is formed at a higher temperature than MnS, there is also an advantage that such sulfide particles become coarse and thus can improve the blanking properties. Therefore, the total content of one or more of Ca, Mg, and REM is preferably set to 0.0010% or more. Meanwhile, when an excessive amount of Ca, Mg, and REM is added, inclusions are produced and productivity is reduced. Therefore, the total content of one or more of Ca, Mg, and REM is preferably set to 0.0080% or less, more preferably to 0.0050% or less.

### -Group B: one or more elements selected from the group consisting of Ti, Nb, and V: a total of 0.0005 to 0.0030%

Each of Ti, Nb, and V has the effect of improving the blanking properties by forming precipitates and also a fine microstructure and dispersing the precipitates. Therefore, the total content of one or more of Ti, Nb, and V is preferably set to 0.0005% or more. Meanwhile, when an excessive amount of Ti, Nb, and V is added, the growth of crystal grains is significantly hindered, and the iron loss property deteriorates. Therefore, the total content of one or more of Ti, Nb, and V is preferably set to 0.0030% or less.

### -Group C: one or more elements selected from the group consisting of Cr, Mo, Cu, and Ni: 0.005 to 0.40% in total

Each of Cr, Mo, Cu, and Ni has the effect of increasing the specific resistance of steel and thus improving the iron loss property. Therefore, the total content of one or more of Cr, Mo, Cu, and Ni is preferably set to 0.005% or more. Meanwhile, when an excessive amount of Cr, Mo, Cu, and Ni is added, the surface quality deteriorates. Therefore, the total content of one or more of Cr, Mo, Cu, and Ni is preferably set to 0.40% or less.

### -Group D: one or more elements selected from the group consisting of Co, W, and Ta: a total of 0.0005 to 0.0200%

Each of Co, W, and Ta has the effect of improving the blanking properties by forming precipitates and also by forming a fine microstructure and dispersing the precipitates. Therefore, the total content of one or more of Co, W, and Ta is preferably set to 0.0005% or more. Further preferably, the total content of one or more of Co, W, and Ta is set to 0.0010% or more. Meanwhile, when an excessive amount of Co, W, and Ta is added, the growth of crystal grains is significantly hindered, and the iron loss property deteriorates. Therefore, the total content of one or more of Co, W, and Ta is preferably set to 0.0200% or less.

### -Group E: B: 0.0003 to 0.0040%

B has the effect of improving the blanking properties by rendering the microstructure finer. To obtain such an effect, the B content is preferably set to 0.0003% or more. Meanwhile, when an excessive amount of B is added, such an effect is saturated and an excessive amount of boride is produced, which degrades the iron loss property. Therefore, the B content is preferably set to 0.0040% or less.

### -Group F: one or more elements selected from the group consisting of Ge and Ga: 0.0005 to 0.0100% in total

Each of Ge and Ga has the effect of improving the iron loss property by being segregated on the surface of the steel sheet or at crystal grain boundaries and thus suppressing oxidation and nitridation during annealing. To obtain this effect, the total content of one or more elements selected from the group consisting of Ge and Ga is preferably set to 0.0005% or more. More preferably, the content of Ge and Ga is set to 0.0008% or more. Meanwhile, when an excessive amount of Ge and Ga is added, significant segregation occurs, which degrades the blanking properties. Therefore, the content of Ge and Ga is preferably set to 0.0100% or less.

### -Group G: one or more elements selected from the group consisting of Zn and As: a total of 0.001 to 0.010%

Each of Zn and As has the effect of improving the blanking properties by rendering the microstructure finer. To obtain such an effect, the total content of one or more elements selected from the group consisting of Zn and As is preferably set to 0.001% or more. Meanwhile, when an excessive amount of Zn and As is added, an excessive amount of oxide is formed, which degrades the iron loss property. Therefore, the content of Zn and As is preferably set to 0.010% or less.

### -Group I: Pb: 0.0001 to 0.0015%

Pb has the effect of improving the blanking properties by rendering the microstructure finer. To obtain such an effect, the Pb content is preferably set to 0.0001% or more. Meanwhile, when an excessive amount of Pb is added, the iron loss property deteriorates due to finely dispersed Pb particles. Therefore, the Pb content is preferably set to 0.0015% or less.

Next, the form of the AlN particles present in the non-oriented electrical steel sheet according to the present embodiment will be described.

The number of AlN particles having a particle size of 0.8 µm or more present in a thickness cross-section of the steel sheet in the rolling direction: 10 or more per mm²

The blanking properties of the steel sheet largely depend on the state in which the AlN particles are dispersed in the steel sheet. Specifically, when the particle size of the AlN particles is small, there is no great influence on the fracture behavior during blanking. Meanwhile, when the number of AlN particles with a particle size of 0.8 µm or more, which are dispersed in the thickness cross-section in the rolling direction of the non-oriented electrical steel sheet, is 10 or more per mm², the ratio of the shear surface of the cut surface resulting from blanking increases, which improves the blanking properties. Preferably, the number of AlN particles with a particle size of 0.8 µm or more is 18 or more per mm², more preferably 20 or more per mm². Preferably, it is 50 or less per mm².

When an excessive number of coarse AlN particles are present, the number density of the AlN particles is reduced. Therefore, it is preferable that the number of AlN particles with a particle size of 0.8 µm or more but 6.0 µm or less be 10 or more per mm².

To observe the dispersion state of the AlN particles, a thickness cross-section of the steel sheet in the rolling direction is observed with an FE-SEM-EDX or an FE-EPMA, so that the particle size of each AlN particle is calculated from the square root of the product of the major axis and the minor axis of the AlN particle, and then the number of AlN particles with a particle size of 0.8 µm or more per unit area is measured.

Next, the magnetic properties and the blanking properties of the non-oriented electrical steel sheet according to the present embodiment will be described.

### Magnetic properties

The magnetic properties of the steel sheet obtained by blanking are evaluated. For example, when a steel sheet with a thickness of 0.25 mm obtained by blanking has an iron loss W_{15/50} of 2.40 W/kg or less, such a steel sheet is evaluated as having excellent magnetic properties and thus being effective in improving the efficiency of a motor, for example.

### Blanking properties

The blanking properties of a steel sheet are evaluated based on the ratio of the shear surface of the cut surface S resulting from blanking. When the ratio of the shear surface is 60% or more, excellent magnetic properties are obtained even with blanking only. Herein, the ratio (%) of the shear surface means, with reference to Fig. 1, the value of (the area of the shear surface 2)/(the area of the shear surface 2 + the area of the fracture surface 3) × 100.

The ratio of the shear surface is defined as above because it has been newly found that, with respect to the cut surface S resulting from blanking, the shear surface 2 and the fracture surface 3 have influence on the blanking properties, and in particular, the ratio of the shear surface 2 has great influence on the blanking properties.

The areas of the shear surface 2 and the fracture surface 3 are determined by observing the cut surface S resulting from blanking using an optical microscope.

### <Method for producing non-oriented electrical steel sheet>

Next, the method for producing a non-oriented electrical steel sheet according to the present embodiment will be described.

### Steel slab

The chemical composition of a steel slab used to produce a non-oriented electrical steel sheet of the present embodiment is adjusted to be within the above range. A method for melting the steel may be a known refining process using, for example, a converter or an electric furnace or a vacuum degassing apparatus and is not specified. In addition, the method for producing the steel slab is preferably a continuous casting process, but may also include an ingot making-blooming process or a thin slab continuous casting process, for example. Further, iron scraps or direct reduced iron may be used as the raw material.

### Hot rolling

The heating start temperature for the steel slab: 300°C or higher and the heating temperature for the steel slab: 1100 to 1300°C

Hot rolling is a step to obtain a hot-rolled sheet with a predetermined thickness by reheating the steel slab with the above chemical composition to a predetermined temperature and then hot-rolling the steel slab. However, when the resulting steel slab is cooled to a low temperature of lower than 300°C, AlN particles in the slab are excessively coarsened and the number of AlN particles is reduced, so that a sufficient number density of AlN particles cannot be achieved in the product sheet. Therefore, it is necessary to maintain the surface temperature of the steel slab at 300°C or higher by using a heat-retention cover, for example, to achieve the heating start temperature for the steel slab at 300°C or higher. From the viewpoint of increasing the number density of AlN particles, the heating start temperature for the steel slab is preferably set to 450°C or higher, more preferably to 550°C or higher.

As described above, since the AlN particles in the steel slab before heating are large in particle size and small in number, it is necessary to melt some of the AlN particles in order to disperse the AlN particles properly during hot rolling or during a step after hot rolling. Therefore, the heating temperature for the steel slab is set to 1 100°C or higher. To melt some of the AlN particles to sufficiently increase the number density of the AlN particles, the heating temperature for the steel slab is preferably set to 1150°C or higher, and more preferably to 1220°C or higher. Meanwhile, when the heating temperature for the steel slab is too high, the remelting of the AlN particles proceeds excessively, so that fine AlN particles are precipitated during cooling after hot rolling. In such a case, it is difficult to obtain large AlN particles in the product sheet. Therefore, the heating temperature for the steel slab is set to 1300°C or less.

The steel slab is held at the above heating temperature for preferably 10 minutes or more, but to achieve a more uniform temperature in the steel slab, 15 minutes or more is more preferable.

The hot rolling subsequent to the heating of the slab may be performed under commonly known conditions.

The coil winding temperature of the hot-rolled steel sheet is preferably set at 500°C or more but 700°C or less.

### Hot-band annealing

The annealing temperature of the hot-rolled sheet: 800 to 950°C

The hot-rolled steel sheet is subjected to hot-band annealing to promote the recrystallization and coarsening of the rolling texture of the hot-rolled sheet and also coarsen the AlN particles up to an appropriate size so as to improve the blanking properties. For this purpose, the annealing temperature of the hot-rolled sheet is set to 800°C or higher. Preferably, the annealing temperature of the hot-rolled sheet is set to 850°C or higher. Meanwhile, when the annealing temperature of the hot-rolled sheet is too high, some of the AlN particles melt, so that the number of coarse AlN particles is reduced, reducing the blanking properties. Thus, the annealing temperature of the hot-rolled sheet is set to 950°C or lower. Preferably, the annealing temperature of the hot-rolled sheet is set to 930°C or lower. Note that the soaking time of the hot-band annealing may be the time required to heat the hot-rolled sheet uniformly and is preferably 5 to 200 seconds.

### Pickling

Pickling is a step in which the steel sheet is pickled after hot-band annealing to remove scales. Pickling may be performed to remove scales to the extent that the subsequent cold-rolling step can be performed, and common pickling conditions using hydrochloric acid, sulfuric acid, or the like may be used. To promote the removal of scales, it is also possible to cause cracking in the scales by mechanical means such as shot blasting or light draft rolling before or during pickling.

### Cold rolling

Cold rolling is a step in which the hot-band-annealed steel sheet is cold-rolled after pickling to achieve the thickness (final thickness) of a product sheet. Cold rolling is not specified as long as it can achieve the final thickness. However, when the rolling reduction in the cold rolling is too low, the strength of the steel sheet after finishing annealing may be significantly reduced. Therefore, the cold rolling reduction is preferably set to 50% or more, more preferably to 70% or more. In addition, cold rolling is not limited to one cold-rolling step, and two or more cold-rolling steps may be performed with intermediate annealing interposed between each cold-rolling step as appropriate. In this case, the intermediate annealing conditions are not specified and may be common conditions.

### Finishing annealing

The temperature of finishing annealing: 850 to 1050°C

Finishing annealing of the cold-rolled sheet is a step in which the cold-rolled sheet, which has been cold-rolled to the final thickness, is annealed to achieve the desired magnetic properties and strength properties. To sufficiently remove the strain introduced during cold rolling by recrystallization and thus obtain excellent magnetic properties, the temperature of the finishing annealing of the cold-rolled sheet is set to 850°C or higher. To obtain more excellent magnetic properties, the temperature of the finishing annealing of the cold-rolled sheet is preferably set to 880°C or higher. Meanwhile, when the finishing annealing temperature of the cold-rolled sheet is too high, the resulting recrystallized texture is too coarse, and the magnetic properties are reduced. Thus, the temperature of the finishing annealing of the cold-rolled sheet is set to 1050°C or lower. Preferably, the temperature of the finishing annealing of the cold-rolled sheet is set to 1030°C or lower.

The steel sheet subjected to the finishing annealing is coated with an insulation coating, as necessary, to produce a product sheet. The type of the insulation coating is not specified and may be an inorganic coating, an organic coating, or a mixture thereof.

### Example

A slab was formed by melting steel with the chemical composition shown in Table 1 using a common refining process and then subjecting the steel to a continuous casting process. The slab was then heated in a gas furnace to a temperature of 1120°C for 45 minutes and then subjected to hot rolling including rough rolling and finish rolling, to obtain a hot-rolled sheet with a thickness of 1.8 mm. The hot-rolled sheet was subjected to hot-band annealing, followed by pickling and cold rolling to obtain a cold-rolled sheet with a final thickness of 0.25 mm. The cold-rolled sheet was then subjected to finishing annealing to produce a product sheet. Table 2 shows the conditions of the hot rolling, hot-band annealing, and finishing annealing of the cold-rolled sheet.

Next, a sample was taken from the product sheet subjected to the following evaluation test.

### [Magnetic properties]

A specimen with a width of 30 mm and a length of 280 mm was taken from the L-direction (rolling direction) and the C-direction (direction perpendicular to the rolling direction) of the sample by blanking with a clearance of 5%. Then, the iron loss W_{15/50} of the specimen was measured in accordance with JIS C 2550-1.

### [Blanking properties]

A cross-section in the rolling direction of the sample was polished and was then observed by FE-SEM. The number of AlN particles with a particle size of 0.8 µm or more per mm² was measured by the above method.

A specimen with a length of 280 mm and a width of 10 mm was taken from the L and C directions of the sample by blanking with a clearance of 5%. Then, the cut surfaces in the L- and C- directions were observed with an optical microscope so that the ratios of the shear surfaces in the L and C directions were measured, and the mean value thereof was determined. As a result, the specimen in which the ratio of the shear surface is more than 65% is determined to have excellent blanking properties and is indicated by "Excellent," the specimen in which the ratio of the shear surface is in the range of 60% to 65% is determined to have good blanking properties and is indicated by "Good," and the specimen in which the ratio of the shear surface is less than 60% is determined to have poor blanking properties, and is indicated by "Poor."

Table 2 shows the evaluation results; when the number density of AlN particles with a particle size of 0.8 µm or more is 10 or more per mm², the ratio of the shear surface is 60% or more and the iron loss is 2.40 W/kg or less, which indicates excellent magnetic properties; when the number density of AlN particles with a particle size of 0.8 µm or more is more than 18 per mm², the ratio of the shear surface is more than 65% and the iron loss is 2.10 W/kg or less, which indicates further excellent magnetic properties.

**[Table 1-1]**

| Steel No. | Chemical Composition (mass%) | | | | | | | | | | | Remarks |
|---|---|---|---|---|---|---|---|---|---|---|---|---|
| | C | Si | Mn | P | S | Al | N | O | Sn | Sb | Others | |
| 1 | 0.0033 | 2.8 | 0.30 | 0.010 | 0.0030 | 0.64 | 0.0084 | 0.0013 | 0.025 | - | - | Invention Example |
| 2 | 0.0021 | 3.2 | 0.50 | 0.010 | 0.0018 | 0.55 | 0.0081 | 0.0018 | 0.032 | - | - | Invention Example |
| 3 | 0.0026 | 2.0 | 1.00 | 0.010 | 0.0009 | 1.50 | 0.0062 | 0.0012 | - | 0.010 | - | Invention Example |
| 4 | 0.0025 | 2.8 | 0.50 | 0.012 | 0.0012 | 0.83 | 0.0115 | 0.0008 | 0.010 | - | - | Invention Example |
| 5 | 0.0024 | 3.5 | 0.55 | 0.007 | 0.0023 | 0.60 | 0.0150 | 0.0025 | 0.020 | - | - | Invention Example |
| 6 | 0.0012 | 3.2 | 0.76 | 0.005 | 0.0032 | 0.65 | 0.0131 | 0.0016 | 0.020 | 0.010 | - | Invention Example |
| 7 | 0.0014 | 3.4 | 0.80 | 0.012 | 0.0024 | 0.68 | 0.0026 | 0.0031 | 0.040 | - | - | Comparative Example |
| 8 | 0.0026 | 4.0 | 0.20 | 0.018 | 0.0033 | 0.25 | 0.0091 | 0.0022 | 0.025 | 0.015 | Ca:0.0026 | Invention Example |
| 9 | 0.0021 | 3.5 | 0.56 | 0.013 | 0.0051 | 0.71 | 0.0089 | 0.0014 | 0.050 | - | Mg:0.0053 | Invention Example |
| 10 | 0.0028 | 3.5 | 0.83 | 0.010 | 0.0039 | 0.30 | 0.0104 | 0.0024 | - | 0.030 | Ti:0.0030 | Invention Example |
| 11 | 0.0031 | 3.2 | 1.34 | 0.009 | 0.0006 | 0.75 | 0.0094 | 0.0013 | 0.020 | - | Nb:0.0009 | Invention Example |
| 12 | 0.0017 | 3.4 | 1.20 | 0.015 | 0.0016 | 0.60 | 0.0087 | 0.0018 | - | 0.022 | V:0.0023 | Invention Example |
| 13 | 0.0016 | 2.7 | 0.58 | 0.008 | 0.0017 | 0.60 | 0.0132 | 0.0021 | 0.034 | - | Cr:0.15 | Invention Example |
| 14 | 0.0023 | 2.8 | 0.45 | 0.007 | 0.0029 | 0.72 | 0.0078 | 0.0027 | 0.024 | 0.008 | Mo:0.03 | Invention Example |
| 15 | 0.0026 | 3.2 | 0.33 | 0.004 | 0.0034 | 0.65 | 0.0085 | 0.0025 | 0.026 | 0.008 | Cu:0.05 | Invention Example |
| 16 | 0.0024 | 3.5 | 0.39 | 0.017 | 0.0016 | 0.68 | 0.0092 | 0.0011 | 0.038 | - | Ni:0.03 | Invention Example |
| 17 | 0.0021 | 2.6 | 0.41 | 0.010 | 0.0018 | 0.76 | 0.0087 | 0.0015 | 0.028 | - | Cu:0.10,Ni:0.06 | Invention Example |
| 18 | 0.0034 | 2.8 | 0.54 | 0.011 | 0.0021 | 0.71 | 0.0091 | 0.0024 | 0.026 | 0.012 | B:0.0008 | Invention Example |
| 19 | 0.0034 | 1.2 | 0.31 | 0.010 | 0.0020 | 0.54 | 0.0088 | 0.0014 | 0.026 | - | - | Comparative Example |

**[Table 1-2]**

| Steel No. | Chemical Composition (mass%) | | | | | | | | | | | Remarks |
|---|---|---|---|---|---|---|---|---|---|---|---|---|
| | C | Si | Mn | P | S | Al | N | O | Sn | Sb | Others | |
| 20 | 0.0018 | 3.6 | 0.56 | 0.012 | 0.0019 | 0.87 | 0.0084 | 0.0007 | 0.030 | 0.010 | Ca:0.0018, Ti:0.001 | Invention Example |
| 21 | 0.0020 | 3.2 | 0.62 | 0.008 | 0.0026 | 1.34 | 0.0078 | 0.0016 | 0.027 | - | Cr:0.04,Mo:0.02 | Invention Example |
| 22 | 0.0032 | 2.9 | 0.25 | 0.010 | 0.0023 | 0.75 | 0.0081 | 0.0009 | 0.010 | 0.006 | Co:0.0030 | Invention Example |
| 23 | 0.0024 | 2.8 | 0.40 | 0.007 | 0.0021 | 0.72 | 0.0063 | 0.0013 | 0.020 | - | W:0.0024 | Invention Example |
| 24 | 0.0024 | 3.0 | 0.25 | 0.011 | 0.0019 | 0.83 | 0.0089 | 0.0010 | - | 0.016 | Co:0.0032, W:0.0012 | Invention Example |
| 25 | 0.0016 | 3.2 | 0.30 | 0.010 | 0.0012 | 0.65 | 0.0086 | 0.0008 | 0.030 | - | Ta:0.0016 | Invention Example |
| 26 | 0.0013 | 2.8 | 0.55 | 0.005 | 0.0014 | 0.70 | 0.0091 | 0.0011 | 0.010 | 0.010 | Ge:0.0010 | Invention Example |
| 27 | 0.0026 | 3.1 | 0.45 | 0.011 | 0.0014 | 0.63 | 0.0086 | 0.0007 | 0.040 | - | Zn:0.003 | Invention Example |
| 28 | 0.0023 | 2.8 | 0.50 | 0.010 | 0.0016 | 0.72 | 0.0061 | 0.0008 | 0.031 | - | As:0.003 | Invention Example |
| 29 | 0.0041 | 2.8 | 0.55 | 0.013 | 0.0017 | 0.75 | 0.0064 | 0.0012 | 0.032 | - | Ga:0.0015 | Invention Example |
| 30 | 0.003 | 3.0 | 0.55 | 0.014 | 0.0019 | 0.66 | 0.0084 | 0.0006 | 0.028 | - | Pb:0.0009 | Invention Example |
| 31 | 0.0021 | 2.8 | 0.40 | 0.010 | 0.0024 | 0.50 | 0.0063 | 0.0014 | 0.030 | - | Ca:0.0023, Cu:0.22 | Invention Example |
| 32 | 0.0026 | 2.8 | 0.40 | 0.010 | 0.0016 | 0.82 | 0.0074 | 0.0025 | 0.035 | - | Ti:0.0023, W:0.0008 | Invention Example |
| 33 | 0.0012 | 2.8 | 0.55 | 0.008 | 0.0017 | 0.77 | 0.0094 | 0.0016 | 0.025 | - | Mg:0.0034, Mo:0.02, B:0.0010 | Invention Example |
| 34 | 0.0028 | 3.2 | 0.70 | 0.007 | 0.0008 | 0.55 | 0.0055 | 0.0009 | 0.030 | - | Ga:0.0026, As:0.002 | Invention Example |
| 35 | 0.0024 | 3.2 | 0.60 | 0.008 | 0.0005 | 0.60 | 0.0052 | 0.0008 | 0.034 | - | Cu:0.10, Cr:0.15, Pb:0.0006 | Invention Example |
| 36 | 0.0036 | 3.4 | 0.52 | 0.008 | 0.0014 | 0.45 | 0.0067 | 0.0012 | 0.036 | - | Mg:0.0035, B:0.0012, Zn:0.003,Pb:0.0005 | Invention Example |
| 37 | 0.0055 | 2.8 | 0.40 | 0.013 | 0.0023 | 0.63 | 0.0085 | 0.0021 | 0.032 | - | - | Comparative Example |
| 38 | 0.0033 | 5.3 | 0.35 | 0.015 | 0.0024 | 0.71 | 0.0048 | 0.0018 | 0.030 | - | - | Comparative Example |
| 39 | 0.0024 | 2.8 | 0.12 | 0.008 | 0.0029 | 0.74 | 0.0062 | 0.0011 | 0.025 | - | - | Comparative Example |
| 40 | 0.0026 | 2.8 | 1.92 | 0.010 | 0.0017 | 0.68 | 0.0046 | 0.0007 | 0.010 | - | - | Comparative Example |
| 41 | 0.0024 | 2.8 | 0.52 | 0.028 | 0.0014 | 0.62 | 0.0074 | 0.0014 | 0.036 | - | - | Comparative Example |
| 42 | 0.0031 | 2.8 | 0.48 | 0.014 | 0.0061 | 0.34 | 0.0063 | 0.0011 | 0.014 | - | - | Comparative Example |
| 43 | 0.0034 | 2.8 | 0.39 | 0.016 | 0.0009 | 0.12 | 0.0084 | 0.0016 | 0.030 | - | - | Comparative Example |
| 44 | 0.0025 | 2.8 | 0.35 | 0.015 | 0.0014 | 2.16 | 0.0111 | 0.0014 | 0.020 | - | - | Comparative Example |
| 45 | 0.0024 | 2.8 | 0.40 | 0.015 | 0.0019 | 0.55 | 0.0163 | 0.0015 | 0.020 | - | - | Comparative Example |
| 46 | 0.0028 | 2.8 | 0.40 | 0.012 | 0.0014 | 0.63 | 0.0063 | 0.0019 | - | - | - | Comparative Example |
| 47 | 0.0026 | 2.8 | 0.50 | 0.013 | 0.0023 | 0.059 | 0.0062 | 0.0056 | 0.031 | - | - | Comparative Example |

**[Table 2-1]**

| Steel Sheet No. | Steel No. | Slab Heating | | Hot-band Annealing | | Cold-rolled Sheet Annealing | | Number of AlN Particles with Size of 0.8 µm or More (Number/mm²) | Cut Surface Properties | Iron Loss W_{15/50} (W/kg) | Remarks |
|---|---|---|---|---|---|---|---|---|---|---|---|
| | | Heating Start Temperature | Heating Temperature | Temperature | Time | Temperature | Time | | | | |
| | | (°C) | (°C) | (°C) | (s) | (°C) | (s) | | | | |
| 1 | 1 | 520 | 1160 | 930 | 30 | 980 | 15 | 25.6 | Good | 2.13 | Invention Example |
| 2 | 2 | 600 | 1260 | 930 | 30 | 980 | 15 | 24.1 | Excellent | 1.94 | Invention Example |
| 3 | 3 | 300 | 1120 | 950 | 30 | 950 | 15 | 18.1 | Good | 2.26 | Invention Example |
| 4 | 4 | 460 | 1220 | 880 | 30 | 920 | 15 | 31.2 | Excellent | 2.09 | Invention Example |
| 5 | 5 | 320 | 1240 | 920 | 30 | 870 | 15 | 39.8 | Good | 2.16 | Invention Example |
| 6 | 6 | 630 | 1180 | 900 | 30 | 940 | 15 | 35.9 | Excellent | 2.08 | Invention Example |
| 7 | 7 | 530 | 1160 | 950 | 30 | 980 | 15 | 8.4 | Poor | 2.51 | Comparative Example |
| 8 | 8 | 720 | 1100 | 850 | 30 | 1000 | 15 | 26.8 | Good | 2.11 | Invention Example |
| 9 | 9 | 480 | 1240 | 850 | 30 | 970 | 15 | 27.3 | Excellent | 1.97 | Invention Example |
| 10 | 10 | 370 | 1260 | 900 | 30 | 1050 | 15 | 34.6 | Good | 2.09 | Invention Example |
| 11 | 11 | 500 | 1170 | 900 | 30 | 940 | 15 | 28.3 | Good | 2.08 | Invention Example |
| 12 | 12 | 560 | 1200 | 930 | 30 | 980 | 15 | 19.8 | Excellent | 1.93 | Invention Example |
| 13 | 13 | 550 | 1270 | 840 | 30 | 1000 | 15 | 42.6 | Excellent | 1.89 | Invention Example |
| 14 | 14 | 460 | 1210 | 900 | 30 | 1020 | 15 | 20.7 | Good | 2.04 | Invention Example |
| 15 | 15 | 390 | 1140 | 920 | 30 | 960 | 15 | 25.2 | Good | 2.21 | Invention Example |
| 16 | 16 | 700 | 1190 | 940 | 30 | 980 | 15 | 27.3 | Excellent | 1.96 | Invention Example |
| 17 | 17 | 560 | 1220 | 910 | 30 | 980 | 15 | 24.2 | Excellent | 1.98 | Invention Example |
| 18 | 18 | 480 | 1110 | 920 | 30 | 1020 | 15 | 21.3 | Good | 2.03 | Invention Example |
| 19 | 19 | 560 | 1160 | 930 | 30 | 980 | 15 | 17.4 | Good | 2.84 | Comparative Example |

**[Table 2-2]**

| Steel Sheet No. | Steel No. | Slab Heating | | Hot-band Annealing | | Cold-rolled Sheet Annealing | | Number of AlN Particles with Size of 0.8 µm or More (Number/mm²) | Cut Surface Properties | Iron Loss W_{15/50} (W/kg) | Remarks |
|---|---|---|---|---|---|---|---|---|---|---|---|
| | | Heating Start Temperature | Heating Temperature | Temperature | Time | Temperature | Time | | | | |
| | | (°C) | (°C) | (°C) | (s) | (°C) | (s) | | | | |
| 20 | 20 | 630 | 1300 | 930 | 30 | 960 | 15 | 22.4 | Excellent | 1.95 | Invention Example |
| 21 | 21 | 440 | 1280 | 910 | 30 | 960 | 15 | 20.5 | Good | 2.13 | Invention Example |
| 22 | 22 | 620 | 1260 | 930 | 30 | 960 | 15 | 28.7 | Excellent | 1.92 | Invention Example |
| 23 | 23 | 580 | 1230 | 930 | 30 | 960 | 15 | 29.1 | Excellent | 2.04 | Invention Example |
| 24 | 24 | 410 | *1150* | 930 | 30 | 960 | 15 | 36.9 | Good | 2.08 | Invention Example |
| 25 | 25 | 330 | 1230 | 920 | 30 | 980 | 15 | 28.4 | Good | 2.03 | Invention Example |
| 26 | 26 | 580 | 1130 | 920 | 30 | 980 | 15 | 26.8 | Good | 2.05 | Invention Example |
| 27 | 27 | 600 | 1220 | 930 | 30 | 980 | 15 | 21.8 | Excellent | 1.99 | Invention Example |
| 28 | 1 | 520 | 1160 | 1000 | 30 | 980 | 15 | 9.6 | Poor | 2.56 | Comparative Example |
| 29 | 1 | 520 | 1160 | 920 | 30 | 800 | 15 | 7.3 | Poor | 2.63 | Comparative Example |
| 30 | 1 | 240 | 1160 | 930 | 30 | 980 | 15 | 6.1 | Poor | 2.46 | Comparative Example |
| 31 | 1 | 540 | 1120 | 930 | 30 | 980 | 15 | 13.4 | Good | 2.27 | Invention Example |
| 32 | 6 | 500 | 1130 | 930 | 30 | 1000 | 15 | 16.1 | Good | 2.36 | Invention Example |
| 33 | 28 | 550 | 1140 | 920 | 30 | 1000 | 15 | 26.4 | Excellent | 1.96 | Invention Example |
| 34 | 29 | 550 | 1140 | 920 | 30 | 1000 | 15 | 25.4 | Good | 2.01 | Invention Example |
| 35 | 30 | 450 | 1150 | 930 | 30 | 1000 | 15 | 22.6 | Excellent | 1.94 | Invention Example |
| 36 | 31 | 450 | 1200 | 950 | 30 | 1000 | 15 | 25.4 | Excellent | 1.98 | Invention Example |
| 37 | 32 | 450 | 1130 | 900 | 30 | 980 | 15 | 28.4 | Excellent | 2.04 | Invention Example |
| 38 | 33 | 500 | 1150 | 860 | 30 | 1000 | 15 | 32.1 | Excellent | 2.01 | Invention Example |
| 39 | 34 | 600 | 1120 | 900 | 30 | 1000 | 15 | 22.4 | Excellent | 1.94 | Invention Example |
| 40 | 35 | 630 | 1160 | 900 | 30 | 1020 | 15 | 18.6 | Excellent | 1.92 | Invention Example |
| 41 | 36 | 500 | 1230 | 900 | 30 | 1020 | 15 | 25.6 | Excellent | 1.90 | Invention Example |
| 42 | 37 | 550 | 1160 | 900 | 30 | 1000 | 15 | 18.7 | Good | 2.47 | Comparative Example |
| 43 | 38 | 550 | 1160 | 920 | 30 | 1000 | 15 | 20.2 | Poor | 2.43 | Comparative Example |
| 44 | 39 | 500 | 1180 | 920 | 30 | 1000 | 15 | 24.1 | Good | 2.53 | Comparative Example |
| 45 | 40 | 500 | 1180 | 900 | 30 | 1000 | 15 | 19.6 | Good | 2.47 | Comparative Example |
| 46 | 41 | 550 | 1160 | 900 | 30 | 1020 | 15 | 19.7 | Poor | 2.57 | Comparative Example |
| 47 | 42 | 600 | 1160 | 880 | 30 | 1020 | 15 | 22.5 | Good | 2.55 | Comparative Example |
| 48 | 43 | 600 | 1200 | 880 | 30 | 1020 | 15 | 9.1 | Poor | 2.51 | Comparative Example |
| 49 | 44 | 600 | 1160 | 900 | 30 | 1020 | 15 | 14.2 | Poor | 2.45 | Comparative Example |
| 50 | 45 | 600 | 1180 | 900 | 30 | 1000 | 15 | 69.5 | Poor | 2.63 | Comparative Example |
| 51 | 46 | 550 | 1180 | 900 | 30 | 1000 | 15 | 21.3 | Good | 2.45 | Comparative Example |
| 52 | 47 | 550 | 1160 | 900 | 30 | 1000 | 15 | 20.1 | Good | 2.45 | Comparative Example |

### Industrial Applicability

The technology of the present invention is also applicable to the shearing of a stack of a plurality of electrical steel sheets.

### Reference Signs List

S: end portion resulting from shearing
1: shear drop
2: shear surface
3: fracture surface
4: burr
t: thickness

## Claims

1. A non-oriented electrical steel sheet having a chemical composition comprising, in mass%,
C: 0.0050% or less,
Si: 2.0 to 5.0%,
Mn: 0.2 to 1.8%,
P: 0.020% or less,
S: 0.0050% or less,
Al: 0.25 to 2.00%,
N: more than 0.0030% but 0.0150% or less,
O: 0.0050% or less, and
one or both of Sn and Sb: 0.01 to 0.10% in total,
with a balance being Fe and unavoidable impurities,
**characterized in that**
the number of AlN particles with a particle size of 0.8 µm or more present in a thickness cross-section in a rolling direction of the steel sheet is 10 or more per mm².

2. The non-oriented electrical steel sheet according to claim 1, further including, in addition to the chemical composition, at least one group of compositions selected from the following groups A to I, in mass%:
- group A: one or more elements selected from the group consisting of Ca, Mg, and REM: 0.0010 to 0.0080% in total;
- group B: one or more elements selected from the group consisting of Ti, Nb, and V: 0.0005 to 0.0030% in total;
- group C: one or more elements selected from the group consisting of Cr, Mo, Cu, and Ni: 0.005 to 0.40% in total;
- group D: one or more elements selected from the group consisting of Co, W, and Ta: 0.0005 to 0.0200% in total;
- group E: B: 0.0003 to 0.0040%;
- group F: one or more elements selected from the group consisting of Ge and Ga: 0.0005 to 0.0100% in total;
- group G: one or more elements selected from the group consisting of Zn and As: 0.001 to 0.010% in total; and
- group I: Pb: 0.0001 to 0.0015%.

3. The non-oriented electrical steel sheet according to claim 1 or 2, wherein
a ratio of a shear surface of a cut surface of the steel sheet resulting from blanking is 60% or more, where the ratio (%) of the shear surface is a value of (an area of the shear surface)/(the area of the shear surface + an area of a fracture surface) × 100.

4. A method for producing a non-oriented electrical steel sheet, the method comprising:
heating a steel slab having a chemical composition including, in mass%,
C: 0.0050% or less,
Si: 2.0 to 5.0%,
Mn: 0.2 to 1.8%,
P: 0.020% or less,
S: 0.0050% or less,
Al: 0.25 to 2.00%,
N: more than 0.0030% but 0.0150% or less,
O: 0.0050% or less, and
one or both of Sn and Sb: 0.01 to 0.10% in total,
with a balance being Fe and unavoidable impurities;
subjecting the steel slab to hot rolling to obtain a hot-rolled sheet;
subjecting the hot-rolled sheet to hot-band annealing;
performing one cold rolling step or two or more cold rolling steps with intermediate annealing interposed between each cold rolling step to obtain a cold-rolled sheet; and
subjecting the cold-rolled sheet to finishing annealing,
**characterized in that**
the heating of the slab is performed with a heating start temperature of 300°C or higher and a heating temperature of 1100 to 1300°C,
the annealing of the hot-rolled sheet is performed at a temperature of 800 to 950°C, and
the finishing annealing of the cold-rolled sheet is performed at a temperature of 850 to 1050°C.

5. The method for producing the non-oriented electrical steel sheet according to claim 4, wherein
the steel slab further includes, in addition to the chemical composition, at least one group of compositions selected from the following groups A to I, in mass%:
- group A: one or more elements selected from the group consisting of Ca, Mg, and REM: 0.0010 to 0.0080% in total;
- group B: one or more elements selected from the group consisting of Ti, Nb, and V: 0.0005 to 0.0030% in total;
- group C: one or more elements selected from the group consisting of Cr, Mo, Cu, and Ni: 0.005 to 0.40% in total;
- group D: one or more elements selected from the group consisting of Co, W, and Ta: 0.0005 to 0.0200% in total;
- group E: B: 0.0003 to 0.0040%;
- group F: one or more elements selected from the group consisting of Ge and Ga: 0.0005 to 0.0100% in total;
- group G: one or more elements selected from the group consisting of Zn and As: 0.001 to 0.010% in total; and
- group I: Pb: 0.0001 to 0.0015%.
